# EUROPÄISCHE PATENTSCHRIFT

(11) **EP 0 916 568 B1**
(45) Veröffentlichungstag und Bekanntmachung des Hinweises auf die Patenterteilung: **11.07.2001**
(21) Anmeldenummer: 98121773.0
(22) Anmeldetag: 16.11.1998
(51) Int. Cl.: B62D 6/00, B62D 5/04

(54) **Aktuator zum Erzeugen eines zusätzlichen Lenkwinkels für Strassenfahrzeuge**
Actuator for generating an additional steering angle for motor vehicles
Actionneur pour engendrer un angle de braquage supplémentaire pour véhicules automobiles

(30) Priorität: 17.11.1997 DE 19750585
(43) Veröffentlichungstag der Anmeldung: 19.05.1999
(73) Patentinhaber: Deutsches Zentrum für Luft- und Raumfahrt e.V., 53175 Bonn (DE)
(72) Erfinder: Ackermann, Jürgen, Prof. Dr., 82211 Herrsching (DE); Bünte, Tilmann, 82205 Gilching (DE); Dietrich, Johannes, 82205 Gilching (DE); Gombert, Bernd, 82284 Grafrath (DE); Willberg, Bertram, 82296 Schöngeising (DE)
(74) Vertreter: von Kirschbaum, Albrecht, Dipl.-Ing.

(56) Entgegenhaltungen:
- EP-A- 0 340 823
- EP-A- 0 480 159
- DE-A- 3 739 059
- DE-A- 4 102 595
- DE-A- 4 103 067
- DE-C- 19 540 634
- PATENT ABSTRACTS OF JAPAN vol. 018, no. 589 (M-1701), 10. November 1994 (1994-11-10) -& JP 06 219303 A (TOYODA MACH WORKS LTD;OTHERS: 01), 9. August 1994 (1994-08-09)

## Beschreibung

Die Erfindung betrifft einen Aktuator zum Erzeugen eines zusätzlichen Lenkwinkels für Straßenfahrzeuge, mit einem von einem Mikroprozessor gesteuerten, als Antrieb wirkenden Elektromotor und einem mittels des Elektromotors angetriebenen Getriebe, um den zusätzlichen Lenkwinkel an einer gelenkten Fahrzeug-Vorderachse und/oder an einer Fahrzeug-Hinterachse einzugeben.

Bei der konventionellen Lenkung von Straßenfahrzeugen, wie PKW, LKW, Bus u.ä. wird der Lenkwinkel an der gelenkten Achse durch eine mechanisch starre Verbindung vom Lenkrad über ein Lenkgetriebe und Spurstangen an den Rädern erhalten. Hierzu wird in der Regel ein Lenkgetriebe verwendet, das mittels einer festen Übersetzung aus einer Änderung des Lenkradwinkels eine translatorische Bewegung der Spurstangen erzeugt. Die Bewegung der Spurstangen wird ihrerseits durch Spurhebel in den Lenkwinkel an den Rädern umgesetzt.

Bei einigen Entwicklungen der letzten Jahre werden die Lenkeigenschaften eines Fahrzeugs über eine gezielte Beeinflussung des Lenkwinkels verändert. Dazu gehören beispielsweise variable Lenkübersetzungen, aber auch regelungstechnische Verfahren zur Verbesserung der fahrdynamischen Eigenschaften. Hierbei werden fahrdynamische Größen gemessen oder anderweitig ermittelt, mit entsprechenden Sollwerten verglichen und gegebenenfalls die Abweichung zur Ermittlung eines geeigneten Lenkwinkels mitherangezogen. Die Sollwerte der fahrdynamischen Größen werden hierbei in der Regel aus dem Lenkradwinkel und weiteren Größen, wie beispielsweise der Fahrgeschwindigkeit u.ä., ermittelt, da der Lenkradwinkel dem Fahrerwunsch bezüglich der Fahrzeugquer- und -gierdynamik entspricht.

Dieses Vorgehen legt zunächst eine sogenannte "steer-by-wire" -Lösung nahe, bei der in einem Mikroprozessor aus allen relevanten Größen ein Lenkwinkel berechnet wird, der schließlich von einem geeigneten Stellglied an die Räder der gelenkten Achse übertragen wird. Diesem Ansatz stehen jedoch große Sicherheitsbedenken entgegen. Wenn nicht entsprechende sehr aufwendige Sicherheitsmaßnahmen vorgesehen sind, ist bei Ausfall eines solchen Systems das Fahrzeug nicht mehr lenkbar.

Aus diesem Grund wird in vielen Fällen angestrebt, die mechanische Verbindung zwischen Lenkrad und den Rädern der gelenkten Achse beizubehalten und lediglich einen zusätzlichen Lenkwinkel mechanisch zu addieren. Dieser zusätzliche Lenkwinkel ergibt sich aus der Differenz zwischen dem von einem Mikroprozessor berechneten Lenkwinkel und dem Lenkwinkel, der aus der Lenkradstellung resultiert. Eine Vorrichtung, mit der eine mechanische Addition der Lenkwinkel vorgenommen wird, wird nachfolgend der Kürze halber mit Zusatzlenkvorrichtung bezeichnet.

Die Zusatzlenkvorrichtung kann wahlweise
- vor dem Lenkgetriebe, also im Bereich der Lenksäule,
- innerhalb des Lenkgetriebes oder
- nach dem Lenkgetriebe, angeordnet sein, d.h. im Bereich der Spurstangen oder Spurhebel eingreifen.

Bei Ausfall der Zusatzlenkvorrichtung wird auf einfache Weise durch Sperren derselben das konventionelle Verhalten der Lenkung wiederhergestellt, so daß hierdurch die Sicherheit des Lenksystems nicht beeinträchtigt wird.

Die Anforderungen an Zusatzlenkvorrichtungen sind je nach Anwendungszweck unterschiedlich. Im allgemeinen werden jedoch folgende Eigenschaften erwartet:
- ein hohes Maß an Ausfallsicherheit;
- hinreichende dynamische Eigenschaften, also ausreichende Bandbreite und Stellgeschwindigkeit (Der für lineare Tiefpaßglieder definierte Begriff der Bandbreite bezeichnet die Frequenz, bei der der logarithmische Amplitudengang gegenüber der horizontalen Anfangsamplitude um -3dB abgefallen ist. Die Bandbreite ist damit ein Maß, bis zu welcher Frequenz ein Aktuator den geforderten Lenkwinkel hinreichend genau übertragen kann.)
- Spielfreiheit;
- wenig Reibung;
- geringes Bauvolumen und -gewicht;
- niedrige Leistungsaufnahme;
- Robustheit gegenüber mechanischen Belastungen, wie Kräften, Stößen etc.;
- je nach Einbauort Unempfindlichkeit gegen Schmutz
- Erfüllen der Forderung nach geringen Stückkosten seitens der Automobilindustrie.

Für Zusatzlenkvorrichtungen sind Ausführungen (siehe EP 0 480 159A, DE 41 02 595A und die gattungsgemäβe DE 41 03 067A) bekannt, die sich hinsichtlich ihres Eingriffsortes (siehe vorstehende Aufzählung), des Prinzips der mechanischen Wege- oder Winkeladdition und des verwendeten Stellglieds (z.B. hydraulischer Stellzylinder, elektromotorischer Antrieb) unterscheiden.

Keine der vorstehend angegebenen Ausführungen erfüllt gleichzeitig alle der oben angeführten Anforderungen. So ist beispielsweise bei Verwendung eines hydraulischen Stellglieds innerhalb oder nach dem Lenkgetriebe eine hohe dynamische Bandbreite nur mit einem sehr großen Bauvolumen, großen Leitungsquerschnitten und entsprechend hohen Kosten verbunden. Andere Versionen, bei denen in die aufgetrennte Lenksäule beispielsweise elektromotorisch angetriebene Differenzwinkelgetriebe (Planetenradsatz oder Differentialgetriebe) eingebaut sind, haben den Nachteil, daß dies entweder eine Drehrichtungsumkehr oder eine von eins verschiedene Übersetzung zur Folge hat, die entsprechenden Kompensationsaufwand (Umkonstruktion des übrigen Lenkstrangs) zur Folge haben. Außerdem bringen diese Getriebe Spiel und Reibung in die Lenkung, und vermitteln so dem Fahrer ein weniger präzises Lenkgefühl am Lenkrad.

Im allgemeinen geht derzeit der Trend in der Automobilindustrie weg von hydraulischen Systemen und hin zu elektrischen Systemen für (Servo-)Lenkung, Bremsen und weiteren Hilfseinrichtungen. Dies ist begründet durch eine Leistungsersparnis, da elektrische Systeme Antriebsleistung nur dann erfordern, wenn gestellt wird, während im Gegensatz dazu bei hydraulischen Systemen eine Hydropumpe zum Aufrechterhalten eines ständig erforderlichen hydraulischen Drucks immer läuft.

Neben den zuvor beschriebenen Systemen zum Verbessern der fahrdynamischen Eigenschaften durch Korrektur eines vom Lenkrad vorgegebenen Lenkwinkels ist auch schon vorgeschlagen worden, statt der Korrektur des Lenkwinkels an der vom Lenkrad aus mechanisch gelenkten Achse einen zusätzlichen Lenkwinkel an einer anderen Fahrzeugachse aufzuprägen. Beispielsweise sind Systeme bei ansonsten konventionell über die Vorderachse gelenkten Personenkraftwagen bekannt, bei welchen von einem Zusatzlenkwinkel an der Hinterachse Gebrauch gemacht wird, beispielsweise um dadurch den Schwimmwinkel bei Kurvenfahrt zu verkleinern.

Bei dieser Art Einrichtungen ist es erforderlich, die Räder der entsprechenden Achse lenkbar zu machen. Diese Einrichtungen unterscheiden sich daher von den zuvor beschriebenen Einrichtungen dadurch, daß in diesem Fall keine mechanische Addition des vom Lenkrad gestellten Lenkwinkels mit dem vom Mikroprozessor berechneten Zusatzlenkwinkel folgt, sondern ausschließlich der vom Mikroprozessor berechnete Lenkwinkel von einem entsprechenden Aktuator an der entsprechenden Achse gestellt wird. Im Hinblick auf die Verwendung eines Aktuators besteht kein Unterschied. Vielmehr kann der zuletzt behandelte Fall als Sonderfall des zuvor behandelten Falls betrachtet werden, bei welchem lediglich der vom Lenkrad mechanisch erzeugte Lenkwinkelanteil entfällt.

Im folgend wird daher nicht immer zwischen diesen beiden Fällen unterschieden. Vielmehr wird der Begriff Zusatzlenkwinkel bzw. zusätzlicher Lenkwinkel sowohl für einen Korrektur-Lenkwinkel gebraucht, der zu einem durch das Lenkrad mechanisch aufgebrachten Lenkwinkel addiert wird, als auch für einen nicht an der durch das Lenkrad mechanisch gelenkten Achse gestellten Lenkwinkel. Insbesondere gelten in dem zuletzt erwähnten Fall für den Aktuator die gleichen Anforderungen wie für die zuvor beschriebenen Zusatzlenkvorrichtungen. Von bisher bekannten Ausführungen erfüllt keine gleichzeitig diese Forderungen.

Der Erfindung liegt daher die Aufgabe zugrunde, unter Vermeidung der Nachteile der vorstehend angeführten Lösungsansätze einen Aktuator zum Erzeugen eines zusätzlichen Lenkwinkels für Straßenfahrzeuge zu schaffen, der bei unterschiedlichen Prinzipien einer Wege- oder Winkeladdition und an verschiedenen Eingriffsorten eingesetzt werden kann.

Gemäß der Erfindung ist diese Aufgabe mit einem Aktuator zum Erzeugen eines zusätzlichen Lenkwinkels für Straßenfahrzeuge nach dem Oberbegriff des Anspruchs 1 dadurch gelöst, daß als Getriebe entweder ein an sich bekanntes steigungstreues Planeten-Wälz-Gewinde-Spindelgetriebe mit den im Anspruch 1 im einzelnen angegebenen Merkmalen oder ein an sich bekanntes Planeten-Wälz-Gewinde-(PWG-)Spindelgetriebe mit den in Anspruch 2 im einzelnen angegebenen Merkmalen verwendet wird, welchem eine Sensorik zur Positionsbestimmung der Spindelstange mit einem Gewinde geringer Steigung mit einer regelungstechnischen Rückführung zugeordnet ist. Vorteilhafte Ausführungen, Weiterbildungen und Einsatzmöglichkeiten des Aktuators gemäß der Erfindung, sowie auch dessen Verwendung zum Aufbringen eines Zusatzlenkwinkels an einer nicht durch ein Lenkrad mechanisch gelenkten Achse sind Gegenstand von Unteransprüchen.

Aufgrund der erfindungsgemäßen Verwendung des aus DE 195 40 634C bekannten steigungstreuen Planeten-Wälz-Gewinde-Spindelgetriebes (das nachstehend der Einfachheit halber auch als SPWG-Spindelgetriebe bezeichnet ist) oder des aus DE 37 39 059 A bekannten Planeten-Wälz-Getriebe-Spindelgetriebes (das nachstehend der Einfachheit halber auch als PWG-Spindelgetriebe bezeichnet ist) kann, da in beiden Spindelgetrieben die Spindelstange ein Gewinde geringer Steigung aufweist, eine schnelle Drehbewegung eines als Antrieb dienenden Elektromotors mit niedrigem Drehmoment in eine Axialbewegung mit einer sehr hohen Kraft umgewandelt werden, so daß die zum Stellen eines zusätzlichen Lenkwinkels erforderliche Kraft in nur einer Getriebestufe erreicht werden kann. Durch den Einsatz des PWG- oder SPWG-Spindelgetriebes lassen sich somit sehr kleine Systemsteigungen realisieren, was mit anderen Spindeltypen prinzipbedingt nicht realisierbar ist.

Dabei ermöglicht das SPWG-Spindelgetriebe eine Kraftübersetzung bei konstanter Steigung und somit einen Rückschluß auf Größen der Spindelstange, wie Kraft, Position und Beschleunigung aus den bekannten bzw. meßbaren Größen des Elektromotors bzw. motorisch bewegten Teilen des Spindelgetriebes, wie Strom, Winkelposition, Winkelgeschwindigkeit, Winkelbeschleunigung, Drehmoment u.ä..

Aufgrund ihres Funktionsprinzips ist bei dem bekannten PWG-Spindelgetriebe die Übertragung der Tangentialkräfte von einer Spindelstange auf Wälz- oder Rollkörper und von diesen auf eine Spindelmutter schlupfbehaftet, so daß das PWG-Spindelgetriebe eine nicht genau definierte Steigung und folglich auch keine konstante Übersetzung hat. Für den Betrieb einer Zusatzlenkvorrichtung muß jedoch der zusätzliche Lenkwinkel und damit die Position der Spindelstange des PWG-Spindelgetriebes bekannt sein. Damit auch bei dem PWG-Spindelgetriebe die Position der Spindelstange genau definiert über den elektromotorischen Antrieb gestellt werden kann, ist gemäß der Erfindung dem PWG-Spindelgetriebe eine Sensorik zur Positionsbestimmung mit einer regelungstechnischen Rückführung zugeordnet.

Bei dem erfindungsgemäßen Aktuator ist ein kompakter Elektromotor eingesetzt, der ein geringes Gewicht und ein kleines Bauvolumen aufweist und somit unmittelbar an herkömmlichen Lenkgetrieben vorgesehen bzw. diesen zugeordnet werden kann. Gemäß einer bevorzugten Ausführungsform der Erfindung dient die Spindelstange eines PWG- oder SPWG-Spindelgetriebes gleichzeitig als Achse des Elektromotors und ist im Inneren des Läufers des Elektromotors angeordnet.

Der erfindungsgemäße Aktuator weist somit eine besonders kompakte und leichte Bauweise auf und hat, da sowohl in dem PWG-als auch in dem SPWG-Spindelgetriebe die verwendete Spindelstange ein Gewinde geringer Steigung aufweist, ein festes, konstantes Übertragungsverhältnis. Obendrein besteht der erfindungsgemäße Aktuator nur aus wenigen Bauteilen. Schließlich weist der erfindungsgemäße Aktuator aufgrund der geringen, in ihm auftretenden Reibungsverluste einen hohen Wirkungsgrad auf.

Der erfindungsgemäße Aktuator zum Erzeugen eines zusätzlichen Lenkwinkels für Straßenfahrzeuge ermöglicht somit aufgrund der geringen Steigung der in den beiden Spindelgetrieben verwendeten Spindelstange selbst bei Verwendung von preiswerten, den Drehwinkel nicht hoch auflösenden Motoren eine fein abgestimmte Regelung. Bei anderen Getriebelösungen mit gröberer Steigung wird hierzu ein aufwendiger Motor mit einer erheblich aufwendigeren Ansteuerung benötigt.

Nachfolgend wird die Erfindung anhand von bevorzugten Ausführungsformen unter Bezugnahme auf die anliegenden Zeichnungen im einzelnen erläutert. Es zeigen:
- Fig.1: schematisch und stark vereinfacht den Aufbau einer Fahrzeuglenkung ohne erfindungsgemäßen Aktuator;
- Fig.2: ein teilweise aufgeschnittenes steigungstreues Planeten-Wälz-Gewinde-(SPWG-)Spindelgetriebe;
- Fig.3a: eine axiale Schnittansicht eines Planeten-Wälz-Gewinde- (PWG-) Spindelgetriebes;
- Fig.3b: eine Schnittansicht entlang einer Linie III-III in Fig.3a;
- Fig.4: in perspektivischer Darstellung das SPWG-Spindelgetriebe gemäß Fig. 2 bzw. das PWG-Spindelgetriebe nach Fig.3a und 3b mit einer zugeordneten Antriebseinheit;
- Fig.5: eine bevorzugte Ausführungsform einer Einheit aus SPWG- bzw. PWG-Spindelgetriebe und Antriebsmotor;
- Fig.6a: eine perspektivische schematische Darstellung einer Lenkung mit einer ersten Ausführungsform einer Zusatzlenkvorrichtung;
- Fig.6b: eine vergrößerte, teilweise aufgeschnittene Darstellung der Zusatzlenkvorrichtung in Fig.6a;
- Fig.7: eine perspektivische schematische Darstellung eines Abschnitts einer Lenkung mit einer zweiten Ausführungsform einer einem herkömmlichen Lenkgetriebe zugeordneten Zusatzlenkvorrichtung;
- Fig.8a: eine perspektivische schematische Darstellung einer Lenkung mit einer dritten Ausführungsform einer einem herkömmlichen Lenkgetriebe zugeordneten Zusatzlenkvorrichtung;
- Fig.8b: eine vergrößerte Darstellung der dritten Ausführungsform einer einem herkömmlichen Lenkgetriebe zugeordneten Zusatzlenkvorrichtung gemäß Fig.8a;
- Fig.9a: eine perspektivische schematische Darstellung einer Lenkung mit einer vierten Ausführungsform einer einem herkömmlichen Lenkgetriebe zugeordneten Zusatzlenkvorrichtung;
- Fig.9b: eine perspektivische vergrößerte Darstellung der vierten Ausführungsform der dem Lenkgetriebe zugeordneten Zusatzlenkvorrichtung nach Fig. 9a;
- Fig.10a: eine perspektivische schematische Darstellung einer Lenkung einer fünften Ausführungsform einer einem herkömmlichen Lenkgetriebe zugeordneten Zusatzlenkvorrichtung,
- Fig.10b: eine perspektivische vergrößerte Darstellung der fünften Ausführungsform der dem Lenkgetriebe zugeordneten Zusatzlenkvorrichtung in Fig.11a;
- Fig.11a: eine perspektivische schematische Darstellung einer Lenkung mit einer sechsten Ausführungsform einer einem herkömmlichen Lenkgetriebe nachgeschalteten Zusatzlenkvorrichtung;
- Fig.11b: eine perspektivische vergrößerte Darstellung der sechsten Ausführungsform der dem Lenkgetriebe nachgeschalteten Zusatzlenkvorrichtung in Fig.12a;
- Fig.12: eine perspektivische schematische Darstellung einer ausschließlich durch Zuordnung eines erfindungsgemäßen Aktuators lenkbaren Achse, und
- Fig.13: eine perspektivische schematische Darstellung einer Achse, deren Räder unabhängig voneinander ausschließlich durch Zuordnung jeweils eines erfindungsgemäßen Aktuators lenkbar sind.

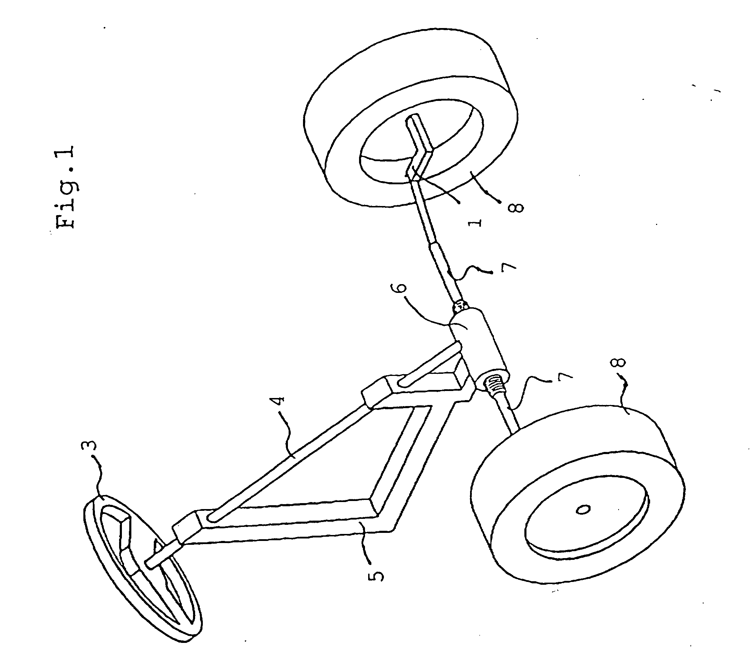

In Fig.1 ist schematisch ein stark vereinfachter Aufbau einer Fahrzeuglenkung dargestellt. Ein mittels eines Lenkrads 3 vorgegebener Lenkwinkel wird über eine Lenksäule 4, die in einer schematisch dargestellten Halterung 5 gehaltert und geführt ist, an ein herkömmliches, im einzelnen nicht dargestelltes Lenkgetriebe 6 übertragen. In dem Lenkgetriebe 6 wird der Lenkwinkel in eine translatorische Bewegung umgesetzt, die über schematisch angedeutete Spurstangen 7 und nicht näher dargestellte Spurhebel 1 in einen Lenkausschlag an den Rädern 8 umgesetzt wird.

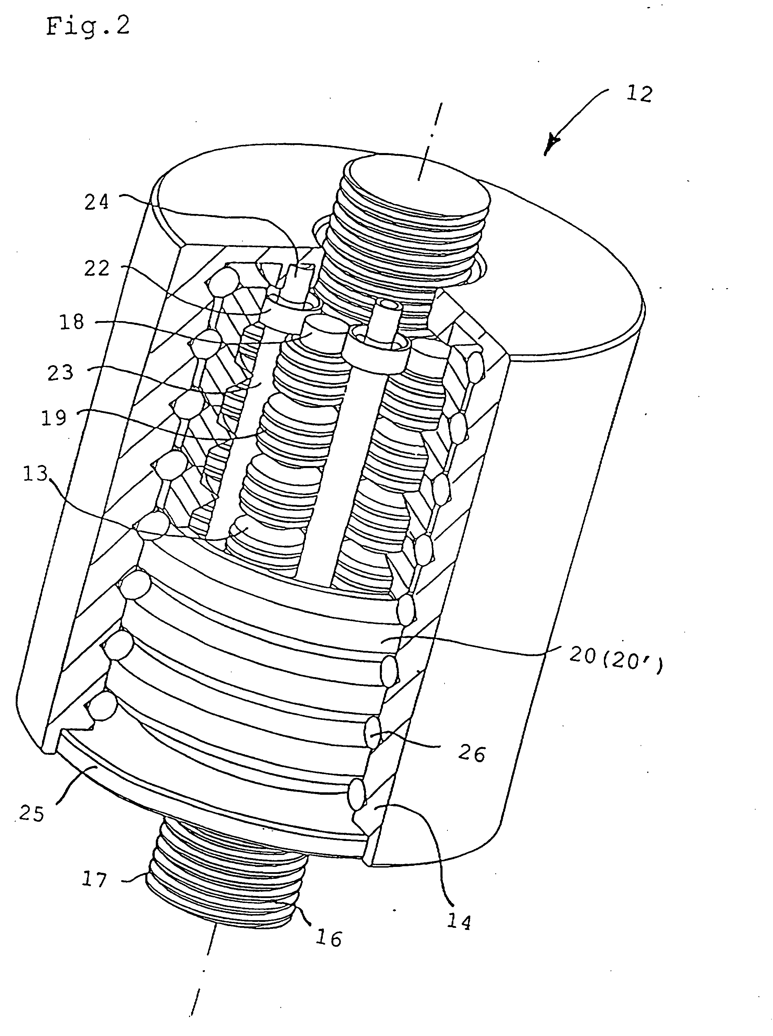

In Fig.2 ist ein teilweise aufgeschnittenes steigungstreues Planeten-Wälz-Gewinde-(SPWG-)Spindelgetriebe 12 dargestellt, welches in der Ausführungsform der Fig.2 eine Spindelstange 16 aufweist, die mit einem ein- oder mehrgängigen Feingewinde 17 versehen ist und von einer Anzahl Roll- oder Wälzkörper 18 umgeben ist. Die Roll- oder Wälzkörper 18 sind in beliebiger Anzahl vorzugsweise in gleichmäßigen Abständen angeordnet. In dem in Fig.2 wiedergegebenen SPWG-Spindelgetriebe 12 sind beispielsweise acht Rollen vorgesehen. Die Roll- oder Wälzkörper 18 weisen eine dem Feingewinde 17 der Spindelstange 16 entsprechende Rillenprofilierung 19 auf.

Eine in die Spindelstange 16 eingeleitete Kraft wird von dem ein- oder mehrgängigen Spindelstangen-Feingewinde 17 auf die abschnittsweise ausgebildete Rollenprofilierung 19 aus nebeneinander angeordneten, parallel zueinander verlaufender Rillen der Roll- und Wälzkörper 18 übertragen. Über in den Roll- und Wälzkörpern 18 vorgesehene, im Querschnitt V-förmig ausgeführte Führungsrillen 13 mit balligen oder geraden Flanken wird die Kraft mittels Gleitkontakt auf eine Anzahl Führungsringe 20 bzw. einen Führungskörper 20' übertragen. Die Führungsringe 20 bzw. der Führungskörper 20' sind in der Spindelmutter 14 durch Kugel- oder Rollenlagerringe 26 oder auch nach dem Kugel- bzw. Wälzkörper-Umlaufprinzip gelagert, so daß zwischen den Führungsringen 20 bzw. dem Führungskörper 20' und der Spindelmutter 14 keine in Umfangsrichtung auftretenden Kräfte bzw. Drehmomente übertragen werden.

Zur Kontaktlagerung der Roll- oder Wälzkörper 18 und um den Abstand der Roll- oder Wälzkörper 18 zueinander konstant zu halten, sind Kugel- oder Rollenlager 22 vorgesehen, welche über Zapfen 23 und Buchsen 24 direkt in der Spindelmutter 14 gehalten sind. Die den Kugel- oder Rollenlagern 22 gegenüberliegenden Kugel- oder Rollenlager sind über in Fig.2 nicht dargestellte Buchsen in einer Spindelabdeckung 25 geführt.

Aufgrund des Vorsehens der vorstehend beschriebenen Führungsringe 20 bzw. des Führungskörpers 20' sowie der Kugel- oder Rollenlager 22 kann zwischen dem Feingewinde 17 der Spindelstange 16 und den Führungsrillen 13 der Roll- oder Wälzkörper 18 kein Schlupf auftreten. Ebenso sind durch Schlupf bedingte oder aus anderen Gründen auftretende Steigungsfehler ausgeschlossen.

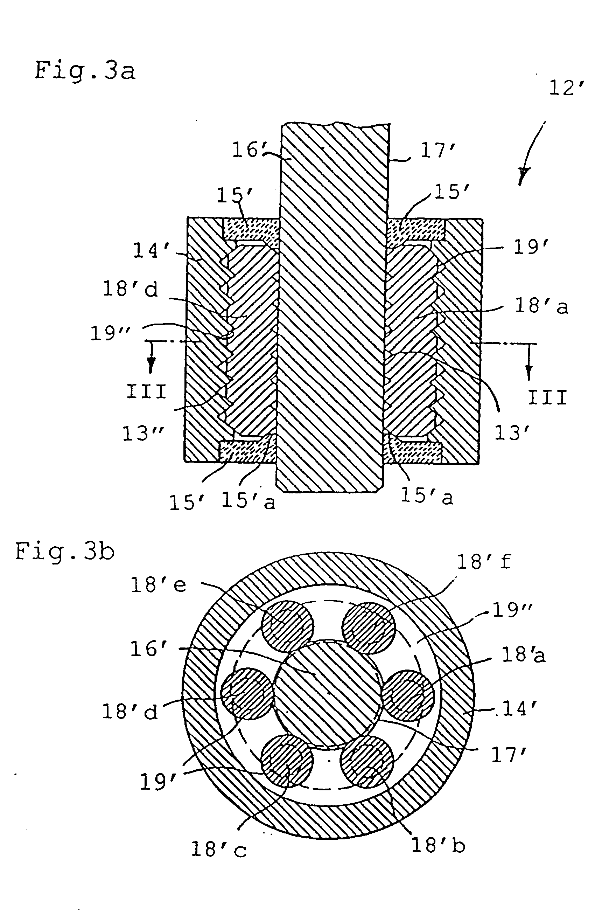

In Fig.3a und 3b ist in einer axialen Schnittansicht eines PWG-Spindelgetriebes 12' bzw. in einer Schnittansicht entlang der Linie III-III in Fig.3a mittig eine Spindelstange 16' bzw. das Ende einer als Spindelstange ausgebildeten Welle, beispielsweise der Welle eines Antriebsmotors dargestellt. Auf einer derartigen Spindelstange 16' ist ein eingängiges oder mehrgängiges Feingewinde 17' aufgebracht.

Um die Spindelstange 16' herum sind mehrere, beispielsweise sechs Roll- oder Wälzkörper 18'a bis 18'f planetenartig angeordnet, wie deutlich der Schnittansicht der Fig.3b zu entnehmen ist. Auf den Roll- oder Wälzkörpern 18'a bis 18'b ist in vorgegebenen Abschnitten eine entsprechend fein ausgebildete Rillenprofilierung 19' aus nebeneinander angeordneten parallel zueinander verlaufenden Rillen bestimmter Teilung aufgebracht, so daß durch diese konstante Teilung der Rillen und deren Tiefe ein exakter Eingriff in das Gewinde 17' mit kleiner Steigung auf der Spindelstange 16' gewährleistet ist.

Ferner sind auf den einzelnen Roll- oder Wälzkörpern 18'a bis 18'f zwischen den Abschnitten mit der feinen Rillenprofilierung 19' grobe Führungsrillen 13' mit V-förmigem Querschnitt ausgebildet. Die Teilung dieser Führungsrillen 13' ist exakt dieselbe wie diejenige von dazu negativen Führungsrillen 13" mit V-förmigem Querschnitt, welche im Inneren der Spindelmutter 14' ausgebildet sind.

Damit alle sechs Roll- oder Wälzkörper 18'sowohl in die mutterseitigen negativen Führungsrillen 13" im Inneren der Spindelmutter 14' als auch in die Spindelstange 16' mit kleiner Gewindesteigung exakt und zuverlässig eingreifen, ist die feine Rillenprofilierung 19' auf jeder der Planetenrollen 18' mit einer von Rolle zu Rolle konstanten, je nach zu erreichender Gesamtsteigung fest vorgegebenen Teilverschiebung angeordnet. Das bedeutet, analog aufgebaute Roll- oder Wälzkörper 18'a bis 18'f weisen jeweils bezüglich der in den vorgesehenen Zwischenabschnitten auf ihnen ausgebildeten, feinen Profilierungen 19' jeweils einen unterschiedlichen Teilungsversatz auf und müssen daher in einer ganz bestimmten Reihenfolge angeordnet werden, welche beispielsweise aus einer Kennzeichnung an der Stirnseite der einzelnen Rollen 18'a bis 18'b zu ersehen ist.

So liegen beispielsweise 180 Winkelgrad zwischen dem Versatz der ersten Rille der feinen Rillenprofilierung 19' auf der in Fig.3a oder 3b rechts angeordneten Rolle 18'a und dem entsprechenden Steigungsversatz der ersten Rille auf der in Fig.3a oder 3b linken Rollen 18'd. In der Schnittansicht der Fig.3a ist als Staubschutz sowie als Halterung und Sicherung für die Roll- oder Wälzkörper 18' oben und unten jeweils eine Abdeckung 15' vorgesehen, welche zum Inneren der Anordnung hin jeweils Ansätze 15'a aufweist, deren Anfasung jeweils der Steigung der groben Führungsrillen 13' am Außenumfang der Roll- oder Wälzkörper 18' entspricht.

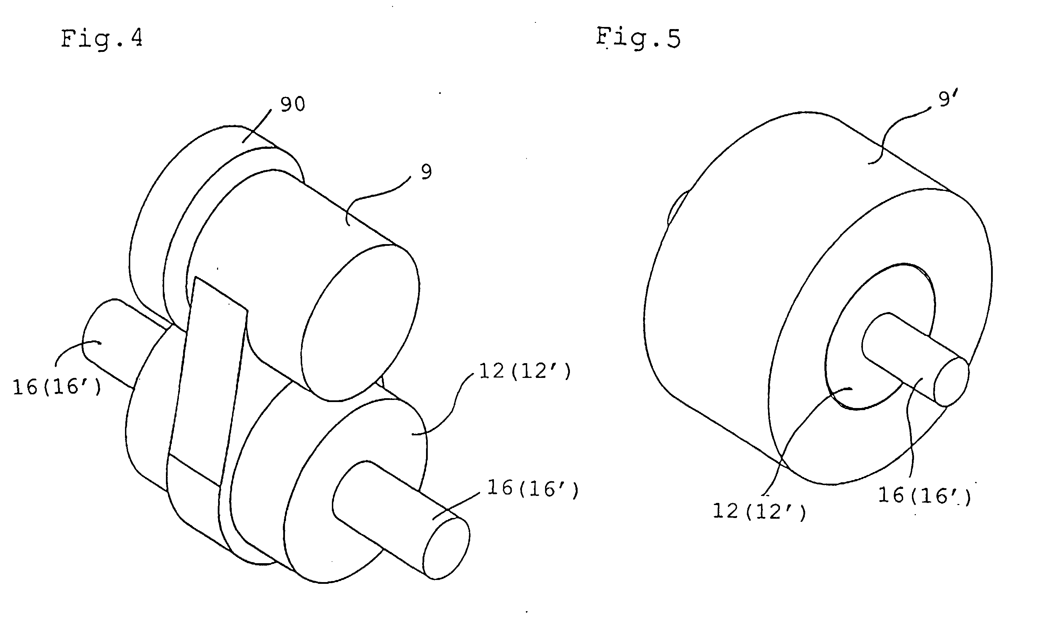

In Fig.4 ist das SPWG- oder PWG-Spindelgetriebe 12 bzw. 12' dargestellt, an dessen beiden Enden die Spindelstange 16 (16') vorsteht, dessen Antrieb ein Elektromotor 9 zugeordnet ist, an welchem abtriebsseitig nur schematisch angedeutete Übertragungselemente 90, beispielsweise in Form von Zahnrädern, vorgesehen sind, die in kämmendem Eingriff mit der Spindelmutter 14 (14') stehen, was jedoch in Fig.4 im einzelnen nicht näher dargestellt ist. Dem Fachmann stehen zahlreiche Möglichkeiten zur Verfügung, um das SPWG- oder PWG-Spindelgetriebe 12 bzw. 12' anzutreiben, um eine schnelle Drehbewegung des als Antrieb dienenden Elektromotors 9 mit niedrigem Drehmoment in eine Axialbewegung der Spindelstange 16 (16') mit sehr großer Kraft umzuwandeln.

In Fig.5 ist eine bevorzugte Ausführungsform des SPWG- oder PWG-Spindelgetriebes 12 bzw. 12' dargestellt, das im Inneren des Läufers eines Elektromotors 9' angeordnet ist, und dessen Spindelstange 16 (16') gleichzeitig als Achse des Elektromotors dient. Hierdurch ist eine besonders kompakte und platzsparende Ausführung eines erfindungsgemäßen Aktuators geschaffen.

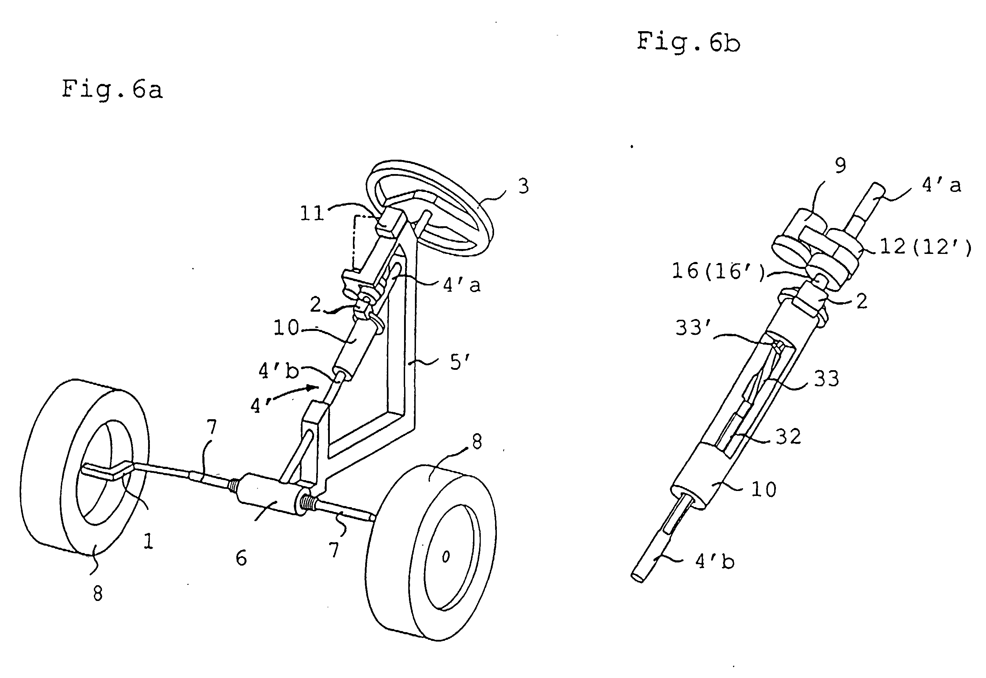

In Fig.6a sind Elemente, welche Elementen der in Fig.1 dargestellten Fahrzeuglenkung entsprechen, mit denselben Bezugszeichen bezeichnet, und werden daher nachstehend nicht nochmals beschrieben. In Fig.6a ist eine geteilte Lenksäule 4' dargestellt, wobei zwischen oberem und unterem Teil 4'a bzw. 4'b der geteilten Lenksäule 4' ein der Fig.4 entsprechender Aktuator aus dem als Antrieb dienenden Elektromotor 9 und dem SPWG- oder PWG-Spindelgetriebe 12 bzw. 12' vorgesehen ist. Obwohl in der folgenden Beschreibung und den Figuren immer ein der Fig.4 entsprechender Aktuator behandelt wird, kann stattdessen in Fig.4 auch der in Fig.5 dargestellte Aktuator oder eine andere entsprechend ausgelegte Ausführungsform verwendet werden.

An der Spindelstange 16 (16') des Spindelgetriebes 12 (12') ist eine schematisch dargestellte Führung 2 vorgesehen, mittels welcher über eine Schiebehülse 10 ein zusätzlicher Lenkwinkel auf den über das Lenkrad 3 vorgegebenen Lenkwinkel aufgebracht wird. Dazu ist der untere Teil 4'b der Lenksäule 4' über eine Keilwellenverzahnung 32 gegenüber der Schiebehülse 10 radial fixiert und axial beweglich geführt. Das untere Ende des oberen Teils 4'a der Lenksäule 4' weist eine Schrägverzahnung 33' auf und die Schiebehülse 10 ist am oberen Ende als Mutter mit einer entsprechenden Schrägverzahnung 33 ausgeführt.

Somit findet bei axialer Verschiebung der Schiebehülse 10 gegenüber dem oberen Teil 4'a der Lenksäule 4' durch eine Führung 2 zwangsweise eine Relativdrehung zwischen den beiden Elementen und damit zwischen den beiden Teilen 4'a und 4'b der Lenksäule 4' statt, welche zum Aufbringen des zusätzlichen Lenkwinkels genutzt wird. Befindet sich die durch die Spindelstange 16 (16') angetriebene Führung 2 in Ruhe, so kann die Schiebehülse 10 sich frei in der Führung 2 drehen, aber nicht axial verschieben; eine Relativverdrehung zwischen dem oberen und dem unteren Teil der Lenksäule 4' ist dann nicht möglich.

Die Größe des zusätzlichen Lenkwinkels ist in einem Mikroprozessor 11 beispielsweise aus dem Lenkradwinkel und gemessenen fahrdynamischen Größen, wie etwa Geschwindigkeit, Gierrate und Querbeschleunigung mittels eines Regelgesetzes berechnet worden. Durch ein dem jeweils berechneten Zusatzwinkel entsprechendes Signal wird dann der dem SPWG- oder PWG-Spindelgetriebe 12 bzw. 12' zugeordnete Motor 9 angesteuert, was in Fig.6a und auch in den nachfolgenden Figuren durch eine strichpunktierte Linie zwischen dem Mikroprozessor 11 und dem Elektromotor 9 angedeutet ist.

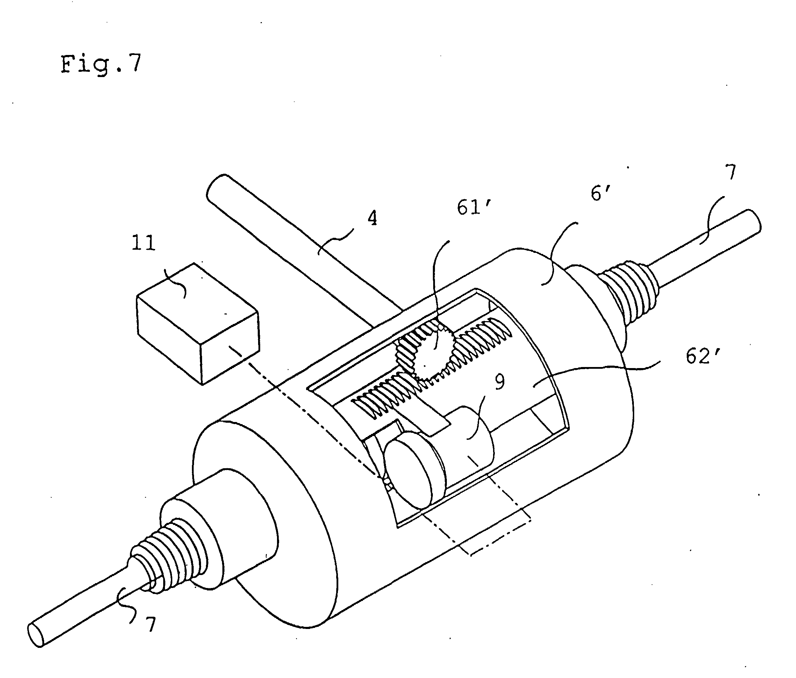

In Fig.7 ist eine zweite Ausführungsform einer Zusatzlenkvorrichtung dargestellt, die einem teilweise aufgeschnittenen, perspektivisch dargestellten herkömmlichen Zahnstangen-Lenkgetriebe 6' zugeordnet ist. An dem in das Lenkgetriebe 6' vorstehenden Ende der Lenksäule 4 ist ein Zahnrad 61' angebracht, das mit der Zahnstange 62' des Lenkgetriebes 6' in kämmendem Eingriff steht. Bei der zweiten Ausführung ist in der Zahnstange 62' des herkömmlichen Zahnstangen-Lenkgetriebes 6' ein in Fig.7 nicht näher dargestelltes SPWG- oder PWG-Spindelgetriebe (12, 12') des Aktuators gemäß Fig.4 integriert.

Bei einer Beaufschlagung des dem SPWG- oder PWG-Spindelgetriebe 12 bzw. 12' zugeordneten Motors 9 des Aktuators gemäß Fig.4 mit einem Signal, das dem von dem Mikroprozessor 11 berechneten zusätzlichen Lenkwinkel entspricht, wird die rotatorische Bewegung des Elektromotors 9 in eine entsprechende translatorische Bewegung umgewandelt, welche über die Spindelstange 16 (16') des Spindelgetriebes 12 (12') eine entsprechende relative Verschiebung der an beiden Enden der Spindelstange 16 (16') angebrachten Spurstangen 7 gegenüber der Zahnstange 62' bewirkt.

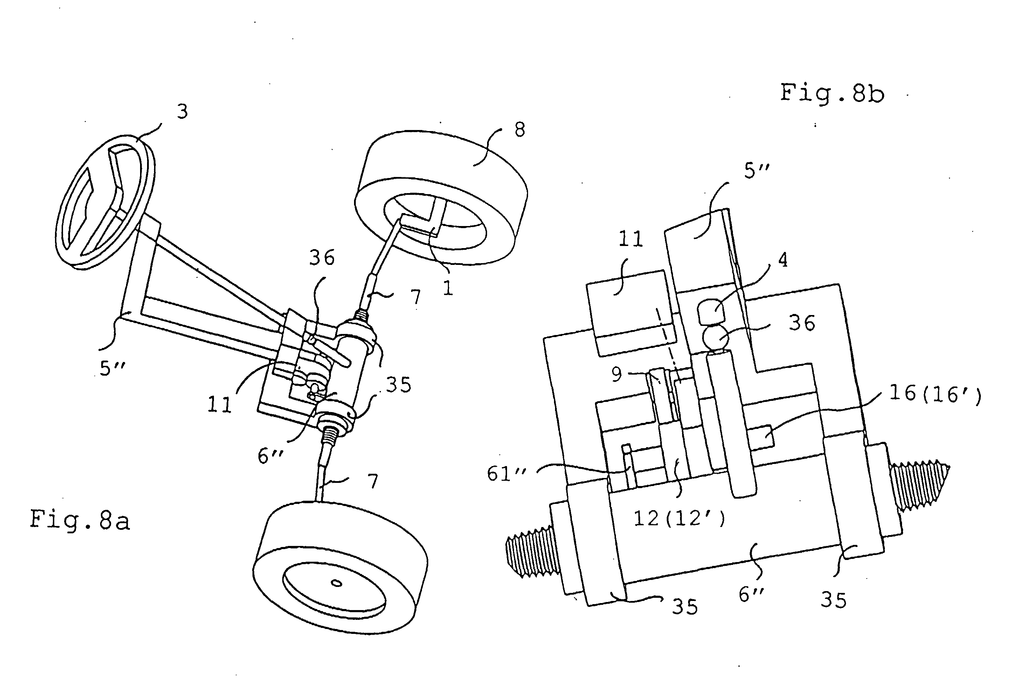

In Fig.8a ist die Lenkung von Fig.1 in der Weise abgeändert, daß das gesamte Lenkgetriebe 6" gegenüber einer schematisch dargestellten Halterung 5" axial verschiebbar gelagert ist. Dazu ist das Lenkgetriebe 6" durch entsprechende Radiallager 35 axial geführt und radial fixiert. Um die kinematische Anbindung der Lenksäule 4 ans Lenkgetriebe 6" zu gewährleisten, sind entsprechende Ausgleichsgelenke zum Winkel- und Längenausgleich in der Lenksäule 4 vorgesehen, was in Fig.8a vereinfacht durch ein Gelenk 36 dargestellt ist. Dem Lenkgetriebe 6" ist ein der Fig.4 entsprechender Aktuator zugeordnet. Ferner ist die Spindelstange 16 (16') des Spindelgetriebes 12 (12') über ein Verbindungsteil 61" mit dem Gehäuse des Lenkgetriebes 6" verbunden.

Sobald der Motor 9 (9') von dem Mikroprozessor 11 mit einem dem berechneten zusätzlichen Lenkwinkel entsprechenden Signal beaufschlagt wird, wird die rotatorische Bewegung des Motors 9 (9') über das Spindelgetriebe 12 (12') in eine translatorische Bewegung der Spindelstange 16 (16') umgesetzt, die wiederum durch das an einem Ende der Spindelstange 16 (16') angebrachte Verbindungsteil 61" zu einer Relativverschiebung des Lenkgetriebes 6" gegenüber der Halterung 5" und damit über die zusätzliche Verschiebung der Spurstangen 7 zu einer entsprechenden Korrektur des über das Lenkrad 3 vorgegebenen Lenkwinkels an den Rädern 8 führt.

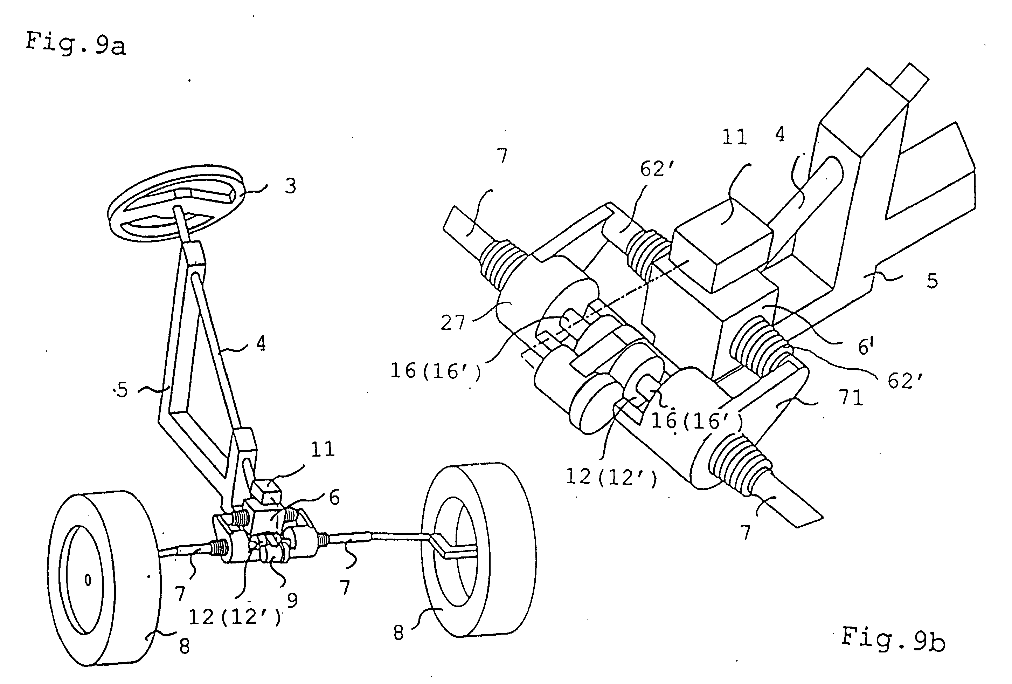

In Fig.9a und 9b ist einem Lenkgetriebe 6 über Spurstangen 70 und an dessen Zahnstange 62' angebrachten Haltearmen 71 ein in einem Gehäuse 27 untergebrachter Aktuator gemäß Fig.4 nachgeschaltet. Die beiden Enden der Spindelstange 16 (16') des im Gehäuse 27 axial fixierten Spindelgetriebes 12 (12') sind an Spurstangen 7 befestigt. Sobald der Motor 9 des Aktuators mit einem im Mikroprozessor 11 berechneten Lenkwinkel-Korrektursignal beaufschlagt worden ist, werden die Spurstangen 7 durch das Spindelgetriebe 12 (12') des Aktuators gegenüber dem Gehäuse 27 entsprechend verschoben.

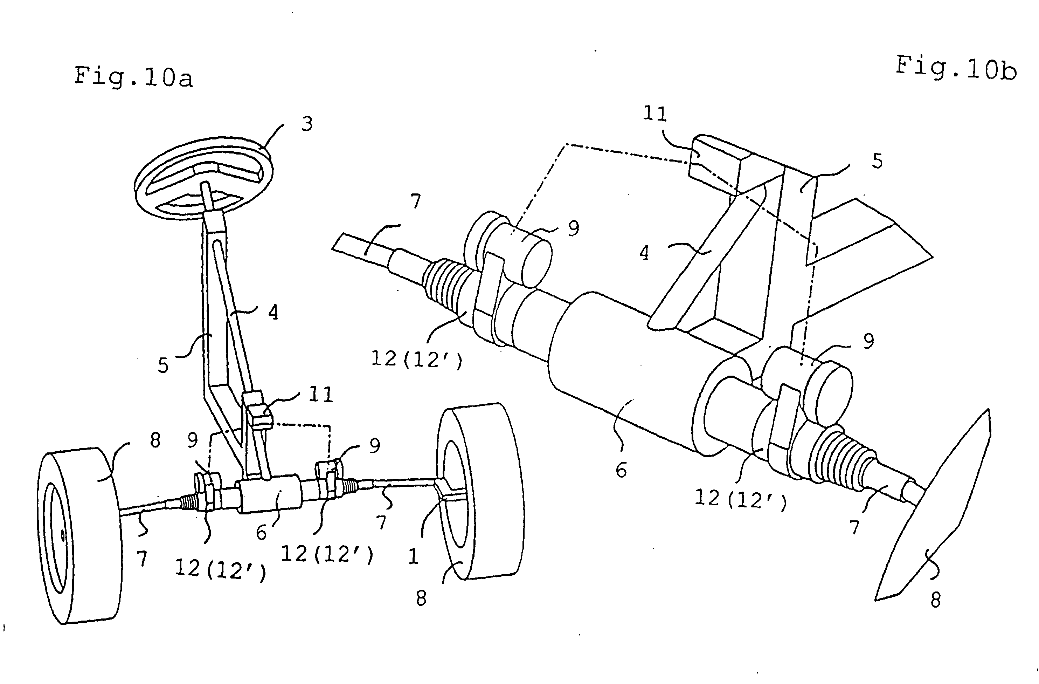

In Fig.10a und 10b sind zwischen dem Lenkgetriebe 6 und den Spurstangen 7 jeweils Zusatzlenkvorrichtungen in Form von Aktuatoren gemäß Fig.4 vorgesehen, deren Motore 9 in Wirkverbindung mit den SPWG- oder PWG-Spindelgetrieben 12 bzw. 12' stehen. Sobald die Motoren 9 von dem Mikroprozessor 11 mit einem dem berechneten zusätzlichen Lenkwinkel entsprechenden Signal beaufschlagt werden, wird die rotatorische Bewegung der Motoren 9 über die Spindeln 12 (12') in eine translatorische Bewegung umgesetzt, die zu einer entsprechenden Verschiebung der Spurstangen 7 gegenüber der Zahnstange 62 des Lenkgetriebes 6 und und damit zu einer entsprechenden Korrektur des über das Lenkrad 3 vorgegebenen Lenkwinkels an den Rädern 8 führt.

Ein besonderer Vorteil der zuletzt beschriebenen Ausführungsform ist die Möglichkeit, durch die Verwendung zweier Aktuatoren ein Verschieben der beiden Spurstangen 7 unabhängig voneinander durch vom Mikroprozessor 11 unabhängig voneinander berechnete Signale an den Motoren 9 einzustellen. Damit lassen sich unterschiedliche Zusatzlenkwinkel an den beiden Rädern 8 der gelenkten Achse insbesondere auch einer gelenkten Fahrzeug-Hinterachse einstellen.

Dies bietet Potential zur Ausnutzung der asymmetrischen Reifeneigenschaften bei Kurvenfahrt für eine optimierte Effektivität einer Lenkregelung. Überdies kann die Lenkdynamik verbessert und der Reifenverschleiß durch eine an die Betriebsbedingungen (z.B. die Fahrgeschwindigkeit) angepaßte Vorspur der gelenkten Achse mittels entsprechender Zusatzlenkwinkel vermindert werden.

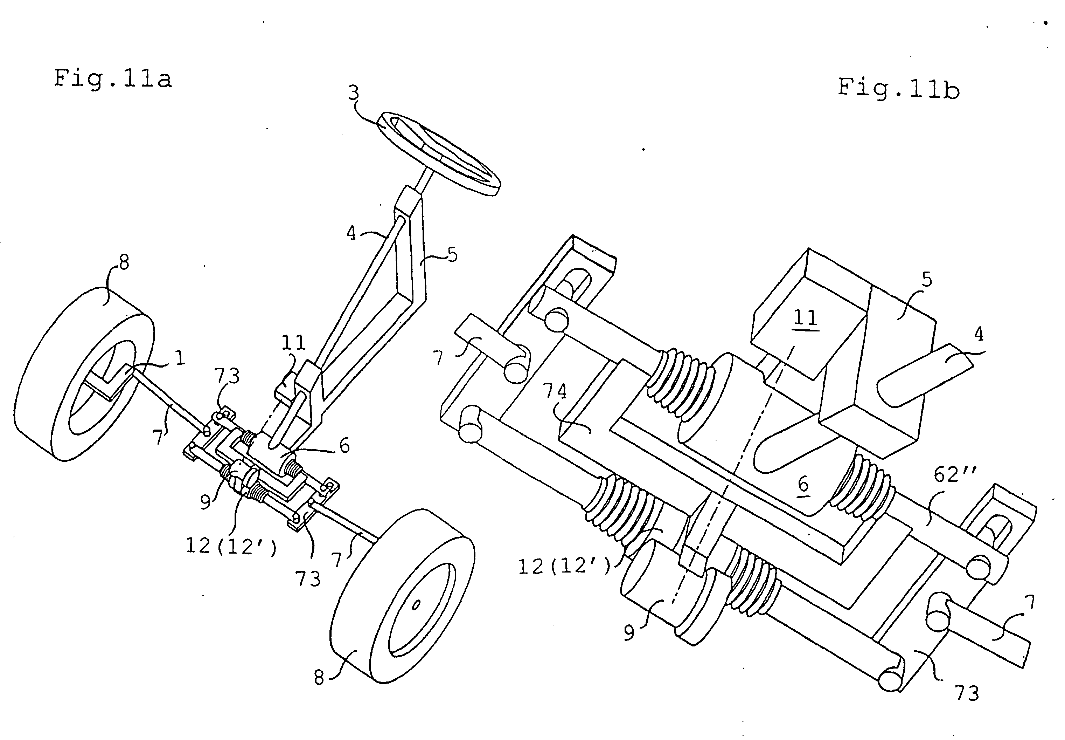

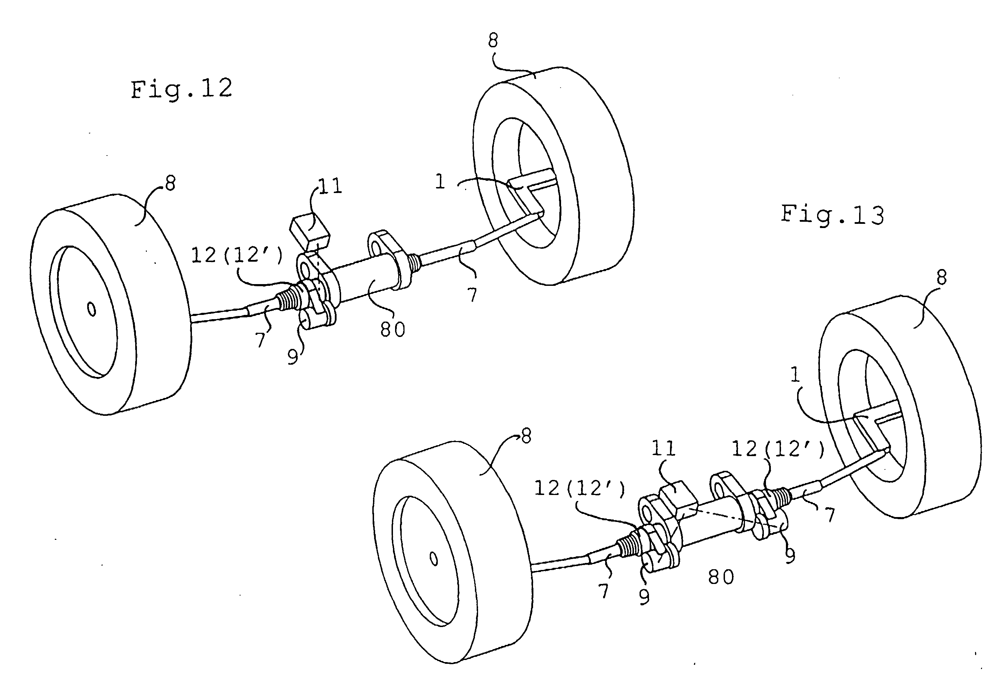

In Fig.11a und 11b ist eine sechste Ausführungsform einer Zusatzlenkvorrichtung dargestellt, welche dem Lenkgetriebe 6 über einen Hebelmechanismus 73 nachgeschaltet ist. Hierzu ist das Spindelgetriebe 12 (12') über einen U-förmigen Tragrahmen 74 mit der Zahnstange 62" des Lenkgetriebes 6 verbunden. Ein Verschieben der Spurstangen 7 resultiert aus der Addition des Verschiebens der Zahnstange 62" und der über den Hebelmechanismus 73 untersetzten Verschiebung einer in Fig.12a und 12b nicht erkennbaren Spindelstange des Spindelgetriebes 12 (12').

Die anhand von Fig.8a bis 11b beschriebenen Ausführungsformen lassen sich sämtlich auch auf nicht durch das Lenkrad mechanisch gelenkte Achsen anwenden, wenn ein über das Lenkrad aufgebrachter Lenkradwinkel zu Null gesetzt wird und die dadurch ergebenden Vereinfachungen konstruktiv sinngemäß berücksichtigt sind.

In den anhand von Fig.8a bis 11b beschriebenen Ausführungsformen entfallen das Lenkrad 3, die Lenksäule 4 und das Zahnrad 61'. Die Zahnstange 62' bzw. 62" und das Lenkgetriebe 6 bzw. 6" sind als Einheit ausgebildet, da keine Relativbewegung erfolgt. Auf diese Weise werden die zweite bis vierte, in Fig.7 bis 9b dargestellten Ausführungsformen zu gleichwertigen Lösungen, da die Spurstangen 7 unmittelbar und ausschließlich durch den Antrieb der Spindelstange 16 bzw. 16' des Aktuators verschoben werden. Dasselbe gilt für die in Fig.11a und llb dargestellte Ausführungsform wobei hier jedoch die Verschiebung der Spindelstange 16" über den Hebelmechanismus 73 untersetzt eine Verschiebung der Spurstangen 7 bewirkt.

In Fig.12 ist eine Ausführungsform für eine nicht vom Lenkrad mechanisch gelenkte Achse dargestellt, deren Räder 8 über Spurstangen 7 und Spurhebel 1 lenkbar sind. Die Spurstange 7 ist an einem mit einem nicht dargestellten Fahrzeug-Chassis verbundenen Gehäuse 80 axial verschieblich gelagert und wird durch einen erfindungsgemäßen Aktuator betätigt, der ein Spindelgetriebe 12 bzw. 12' und den Elektromotor 9 aufweist. Auf diese Weise läßt sich durch ein vom Mikroprozessor 11 berechnetes Signal ein entsprechender Lenkwinkel an den Rädern 8 durch ein Verschieben der Spurstange 7 einstellen.

In Fig.13 ist schließlich noch eine der fünften in Fig.10a und 10b dargestellten Ausführungsform entsprechende Ausführungsform für eine nicht mittels eines Lenkrads mechanisch gelenkte Achse wiedergegeben. An den Rädern 8 sind über Spurstangen 7 von jeweils einem erfindungsgemäßen Aktuator Lenkwinkel entsprechend von einem Mikroprozessor 11 berechneten Signal einzeln einstellbar.

### Bezugszeichenliste:

- 1: Spurhebel
- 2: Führung
- 3: Lenkrad
- 4, 4': Lenksäule
- 4' a: unterer Teil der Lenksäule
- 4' b: oberer Teil der geteilten Lenksäule
- 5, 5": Halterung
- 6, 6', 6": Lenkgetriebe
- 7: Spurstange
- 8: Rad
- 9, 9': Elektromotor
- 10: Schiebehülse
- 11: Mikroprozessor
- 12, 12': Planeten-Wälz-Gewinde-Spindelgetriebe
- 13, 13': Führungsrillen
- 13": negative Führungsrillen
- 14, 14': Spindelmutter
- 15': Abdeckung
- 15' a: Ansatz
- 16, 16',16": Spindelstange
- 17, 17': ein- oder mehrgängiges Feingewinde
- 18, 18' a bis 18' f: Roll- oder Wälzkörper
- 19, 19': Rillenprofilierung
- 20, 20': Führungsringe bzw. Führungskörper
- 22: Kugel- oder Rollenlager
- 23: Zapfen
- 24: Buchse
- 25: Spindelabdeckung
- 26: Kugel- oder Rollenlagerringe
- 27: Gehäuse
- 32: Keilwellenverzahnung
- 33, 33': Schrägverzahnung
- 35: Radiallager
- 36: Gelenk
- 61': Zahnrad
- 61": Verbindungsteil
- 62', 62": Zahnstange
- 71: Haltearm
- 73: Hebelmechanismus
- 74: Tragrahmen
- 80: Gehäuse

## Patentansprüche

1. Aktuator zum Erzeugen eines zusätzlichen Lenkwinkels für Straßenfahrzeuge, mit einem von einem Mikroprozessor (11) gesteuerten, als Antrieb wirkenden Elektromotor (9) und einem mittels des Elektromotors (9) angetriebenen Getriebe (12,12'), um einen zusätzlichen Lenkwinkel an mindestens einer Fahrzeugachse aufzubringen, dadurch **gekennzeichnet,** daß als Getriebe ein an sich bekanntes steigungstreues Planeten-Wälz-Gewinde- (SPWG-)Spindelgetriebe (12) verwendet ist, welches aus einer Spindelstange (16) mit einem Gewinde geringer Steigung, einer diese umgebenden Spindelmutter (14) und einer Anzahl dazwischen angeordneter Wälz- oder Rollkörper (18) mit einer zum Gewinde (17) der Spindelstange (16) passenden Rillenprofilierung (19) besteht, wobei die Wälz- oder Rollkörper (18) über eine Anzahl Führungsringe (20) oder über einen Führungskörper (20') und über dazwischen angeordnete Lager (22) gelagert sind, und die Wälz- oder Rollkörper (18) relativ zur Spindelmutter (14) und zueinander in einem fest vorgegebenen Abstand angeordnet sind.

2. Aktuator zum Erzeugen eines zusätzlichen Lenkwinkels für Straßenfahrzeuge, mit einem von einem Mikroprozessor (11) gesteuerten, als Antrieb wirkenden Elektromotor (9) und einem mittels des Elektromotors (9) angetriebenen Getriebe (12,12'), um einen zusätzlichen Lenkwinkel an mindestens einer Fahrzeugachse aufzubringen, dadurch **gekennzeichnet,** daß als Getriebe ein an sich bekanntes Planeten-Wälz-Gewinde-(PWG-) Spindelgetriebe (12') verwendet ist, welche aus einer Spindelstange (16') mit einem Gewinde (17') geringer Steigung, einer diese umgebenden Spindelmutter (14') mit einer Führungsprofilierung (13") und einer Anzahl dazwischen angeordneter Wälz- oder Rollkörper (18') mit unterschiedlichen Profilierungen, nämlich einer zum Gewinde (17') der Spindelstange (16') passenden Rillenprofilierung (19') und einer zur Führungsprofilierung (13") der Spindelmutter (14') passenden Profilierung (13') besteht, wobei die Profilierungen der Wälz- oder Rollkörper (18') einander überlappen und in einander abwechselnden Abschnitten ausgebildet sind, und die Wälz- oder Rollkörper (18') relativ zur Spindelmutter (14') und zueinander in einem vorgegebenen Abstand angeordnet sind, und dem Planeten-Wälz-Gewinde-Spindelgetriebe (12') eine Sensorik zur Positionsbestimmung der Spindelstange (16') mit einer regelungstechnischen Rückführung zugeordnet ist.

3. Aktuator nach Anspruch 1 oder 2, dadurch **gekennzeichnet,** daß die Spindelstange (16; 16') mit einem Gewinde geringer Steigung gleichzeitig als Achse des Elektromotors (9') dient und im Inneren eines Elektromotor-Läufers (9') angeordnet ist.

4. Verwenden eines Aktuators (9,12;9,12') nach einem der Ansprüche 1 bis 3 zur Längsverschiebung einer in einer geteilten Lenksäule (4') vorgesehenen Schiebehülse (10), wodurch eine Relativverdrehung zwischen oberem und unterem Teil (4'a, 4'b) der geteilten Lenksäule (4') erfolgt.

5. Verwenden eines in einem herkömmlichen Zahnstangen-Lenkgetriebe (6') integrierten Aktuators (9,12;9,12') nach einem der Ansprüche 1 bis 3 zum relativen Verschieben der Spurstangen (7) gegenüber der Zahnstange (62') dieses Lenkgetriebes (6').

6. Verwenden eines Aktuators (9,12;9,12') nach einem der Ansprüche 1 bis 3 zum Verschieben eines axial verschiebbar gehalterten Lenkgetriebes (6") und damit der mit der Zahnstange (62') des Lenkgetriebes (6") verbundenen Spurstangen (7), wobei das axial verschiebbar gehalterte Lenkgetriebe (6") über ein Verbindungsteil (61") mit der Spindelstange (16, 16') des Aktuator-Spindelgetriebes (12, 12') verbunden ist.

7. Verwenden eines Aktuators (9,12; 9,12') nach einem der Ansprüche 1 bis 3 zum Verschieben der Spurstangen (7) gegenüber einem mit dem Spindelgetriebe (12,12') verbundenen Gehäuse (27), welches über Haltearme (71) mit der Zahnstange (62') des Lenkgetriebes (6) verbunden ist.

8. Verwenden eines Aktuators (9,12; 9,12') nach einem der Ansprüche 1 bis 3, welcher axial verschiebbar gelagerten Spurstangen (7) in der Weise zugeordnet ist, daß mittels des Mikrosprozessors (11) durch Verschieben der Spurstangen ein entsprechender Lenkwinkel an den Rädern einstellbar ist.

9. Verwenden von zwei Aktuatoren nach einem der Ansprüche 1 bis 3, von denen jeweils einer zwischen der Zahnstange eines Lenkgetriebes (6) und den beiden Spurstangen (7) vorgesehen ist, so daß durch unterschiedliches Ansteuern der beiden Aktuatoren (9,12;9,12') mittels des Mikroprozessors (11) über die Spurstangen (7) voneinander unabhängige zusätzliche Radlenkwinkel einstellbar sind.

10. Verwenden von zwei Aktuatoren nach einem der Ansprüche 1 bis 3 zum separaten Stellen der Radlenkwinkel der Räder (8) einer lenkbaren Achse durch entsprechendes Ansteuern der beiden Aktuatoren (9,12;9,12') mittels des Mikroprozessors (11).

## Claims

1. An actuator for generating an additional steering angle for road vehicles, having a microprocessor (11) controlled electric motor (9) functioning as the drive, and a gear (12, 12') driven by the electric motor (9) to apply an additional steering angle to at least one axle of a vehicle, **characterized in that** the gear is a known constant-pitch planetary rolling-contact threaded-spindle gear (12), consisting of a spindle rod (16) with a thread having a small pitch, a spindle nut (14) surrounding the former, and a plurality of interposed rollers or rolling elements (18) having a groove profile (19) matching the thread (17) of the spindle (16), said rollers or rolling elements (18) being run on a plurality of guide rings (20) or a guide element (20') and interposed bearings (22), said rollers or rolling elements (18) being arranged relative to the spindle nut (14) and at a fixed distance from one another.

2. An actuator for generating an additional steering angle for road vehicles, having a microprocessor (11) controlled electric motor (9) functioning as the drive, and a gear (12, 12') driven by the electric motor (9) to apply an additional steering angle to at least one axle of a vehicle, **characterized in that** the gear is a known planetary rolling-contact threaded-spindle gear (12'), consisting of a spindle rod (16') with a thread (17') having a small pitch, which is surrounded by a spindle nut (14') with a guide profile (13") and a plurality of interposed rollers or rolling elements (18') with different profiles, namely a groove profile (19') matching the thread (17') of the spindle rod (16'), and a profile (13') matching the guide profile (13") of the spindle nut (14'), said profiles of the rollers or rolling elements (18') overlapping one another and being formed in alternating sections and said rollers or rolling elements (18') being arranged relative to the spindle nut (14') and at a fixed distance to one another, and furthermore a sensor means with control-engineering type feedback being assigned to the planetary rolling-contact spindle gear (12') to determine the position of the spindle rod (16').

3. An actuator according to claim 1 or 2, **characterized in that** the spindle rod (16; 16') with a thread having a small pitch concurrently functions as the axis of the electric motor (9') and is installed inside an electric motor rotor (9').

4. The use of an actuator (9, 12; 9, 12') according to one of the claims 1 through 3 to displace, in a longitudinal direction, a sliding sleeve (10) provided inside a divided steering column (4'), thereby causing a relative rotation between the upper and lower part (4'a, 4'b) of the divided steering column (4').

5. The use of an actuator (9, 12; 9, 12') according to one of the claims 1 through 3, which is integrated into a conventional rack-and-pinion steering gearbox (6'), to displace the steering tie rods (7) relative to the steering rack (62') of said steering gearbox (6').

6. The use of an actuator (9, 12; 9, 12') according to one of the claims 1 through 3 to displace an axially slidable steering gearbox (6"), which is connected to the spindle rod (16, 16') of the actuator spindle gear (12, 12') by means of a connecting part (61"), and along with said axially slideable steering gearbox (6") the steering tie rods (7), which are connected to the steering rack (62') of the steering gearbox (6").

7. The use of an actuator (9, 12; 9, 12') according to one of the claims 1 through 3 to displace the steering tie rods (7) relative to a housing (27), which is connected to the spindle gear (12, 12') and furthermore connected, by means of holding arms (71), to the steering rack (62') of the steering gearbox (6).

8. The use of an actuator (9, 12; 9, 12') according to one of the claims 1 through 3, which is assigned to axially slidable steering tie rods in a manner so that said microprocessor (11) is used to set an appropriate steering angle at the wheels by displacing the steering tie rods.

9. The use of two actuators according to one of the claims 1 through 3, with one actuator positioned between the steering rack of a steering gearbox (6) and one of the steering tie rods (7), and the other actuator positioned between said steering rack and the other steering tie rod (7), so that additional wheel steering angles can be set independently from one another via the steering tie rods (7) by sending different control signals to the two actuators (9,12; 9' 12') from the microprocessor (11).

10. The use of two actuators according to one of the claims 1 through 3 for separately controlling the wheel steering angles of the wheels (8) of a steerable axle by appropriately triggering the two actuators (9, 12; 9, 12') via the microprocessor (11).

## Revendications

1. Actionneur pour produire un angle de braquage supplémentaire pour des véhicules automobiles, comportant un moteur électrique (9), qui est commandé par un microprocesseur (11) et agit en tant que dispositif d'entraînement, et un mécanisme (12,12'), qui est entraîné au moyen du moteur électrique (9), pour appliquer un angle de braquage supplémentaire à au moins un essieu du véhicule, caractérisé en ce qu'on utilise comme mécanisme un mécanisme à engrenage planétaire à roulement, filetage et broche (SPWG) (12) à pas sûr, connue en soi, qui est constituée par une tige de broche (16) comportant un filetage à pas faible, un écrou de broche (14) entourant cette tige, et un certain nombre d'éléments de roulement ou de corps roulants (18) qui sont disposés entre la tige et l'écrou de broche et comportant un profil formé de cannelures (19) qui sont adaptées au filetage (17) de la tige de broche (16), les éléments de roulement ou corps roulants (18) étant montés sur un nombre de bagues de guidage (20) ou sur un corps de guidage (20') et sur des paliers (22) intercalés entre ces éléments, et les éléments de roulement ou corps roulants (18) étant disposés à une distance prédéterminée de façon fixe par rapport à l'écrou de broche (14) et les uns par rapport aux autres.

2. Actionneur pour produire un angle de braquage supplémentaire pour des véhicules automobiles, comportant un moteur électrique (9), qui est commandé par un microprocesseur (11) et agit en tant que dispositif d'entraînement, et un mécanisme (12,12'), qui est entraîné au moyen du moteur électrique (9), pour appliquer un angle de braquage supplémentaire à au moins un essieu du véhicule, caractérisé en ce qu'on utilise comme mécanisme un mécanisme à engrenage planétaire à roulement, filetage et broche (SPWG) (12) à pas sûr, connue en soi, qui est constituée par une tige de broche (16') comportant un filetage (17') à pas faible, un écrou de broche (14') entourant cette tige et comportant un profil de guidage (13") et un certain nombre d'éléments de roulement ou de corps roulants (18') qui sont disposésentre la broche et l'écrou et comportent des profils différents, à savoir un profil formé de cannelures (19') adapté au filetage (17') de la tige de broche (16') et un profil (13') adapté au profil de guidage (13") de l'écrou de broche (14'), les profils des éléments de roulement ou des corps roulants (18') se chevauchant et étant formés dans des sections qui alternent entre elles, et les éléments de roulement ou les corps roulants (18') étant disposés à une distance prédéterminée par rapport à l'écrou de broche (14') et les unes par rapport aux autres, et un système de détection servant à déterminer la position de la tige de broche (16') et comportant un système de réaction technique de régulation, étant associé au mécanisme à engrenage planétaire, roulement, filetage et broche (12').

3. Actionneur selon la revendication 1 ou 2, caractérisé en ce que la tige de broche (16;16') équipée d'un filetage possédant un pas faible est utilisée simultanément en tant qu'axe du moteur électrique (9') et est disposée à l'intérieur d'un rotor (9') du moteur électrique.

4. Utilisation d'un actionneur (9,12;9,12') selon l'une des revendications 1 à 3, pour le déplacement longitudinal d'une douille coulissante (10) qui est prévue dans une colonne de direction divisée (4'), ce qui a pour effet qu'une rotation relative se produit entre la partie supérieure et la partie inférieure (4'a,4'b) de la colonne de direction divisée (4').

5. Utilisation d'un actionneur (9,12;9,12') intégré dans un mécanisme de direction usuel à crémaillère (6') selon l'une des revendications 1 à 3 pour le déplacement relatif des barres d'accouplement (7) par rapport à la crémaillère (62') de ce mécanisme de direction (6').

6. Utilisation d'un actionneur (9,12;9,12') selon l'une des revendications 1 à 3 pour déplacer un mécanisme de direction (6") retenu de manière à être déplaçable axialement et par conséquent des barres d'accouplement (7) reliées à la crémaillère (62') du mécanisme de direction (6"), le mécanisme de direction (6") retenu de manière à être déplaçable axialement étant relié par l'intermédiaire d'une partie de liaison (61") de la tige de broche (16,16') du mécanisme à broche (12,12') de l'actionneur.

7. Utilisation d'un actionneur (9,12;9,12') selon l'une des revendications 1 à 3 pour déplacer les barres d'accouplement (7) par rapport à un boîtier (27), qui est relié au mécanisme à broche (12,12') et qui est relié par l'intermédiaire de bras de retenue (61) à la crémaillère (62') du mécanisme de direction (6).

8. Utilisation d'un actionneur (9,12;9,12') selon l'une des revendications 1 à 3, qui est associé à des barres d'accouplement (7) montées de manière à être déplaçables axialement, de telle sorte qu'un angle de braquage correspondant est réglable au niveau des roues à l'aide du microprocesseur (11), par déplacement des barres d'accouplement.

9. Utilisation d'un actionneur (9,12;9,12') selon l'une des revendications 1 à 3, dont l'un d'eux est prévu entre la crémaillère d'un mécanisme de direction (6) et les deux barres d'accouplement (7), de sorte que sous l'effet d'une commande différente des deux actionneurs (9,12;9,12') au moyen du microprocesseur (11), des angles de braquage supplémentaires de roues, qui sont indépendants l'un de l'autre, peuvent être réglés au moyen du microprocesseur (11) par l'intermédiaire des barres d'accouplement (7).

10. Utilisation d'un actionneur (9,12;9,12') selon l'une des revendications 1 à 3 pour régler séparément l'angle de braquage des roues (8) d'un essieu orientable, moyennant une commande correspondante des deux actionneurs (9,12;9,12') à l'aide du microprocesseur (11).
